# DEMANDE DE BREVET EUROPEEN

(11) **EP 4 086 231 A1**
(43) Date de publication de la demande: **09.11.2022**
(21) Numéro de dépôt: 21171902.6
(22) Date de dépôt: 03.05.2021
(51) Int. Cl.: C02F 3/00, C02F 3/30

(54) **TRAITEMENT DES EAUX USEES PAR BIOMASSE GRANULAIRE AEROBIE EN FLUX CONTINU**

(71) Demandeur: JOHN COCKERILL S.A., 4100 Seraing (BE); Centre Belge d'Etude et de Documentation de l'Eau, en abrégé CEBEDEAU asbl, 4000 Liège (BE)
(72) Inventeur: HENRIET, Olivier, 5081 Bovesse (BE); MAGIS, Alain, 4682 Oupeye (BE); MEUNIER, Christophe, 5150 Floreffe (BE)
(74) Mandataire: AWA Benelux

(57) **Abrégé**

Un réacteur (1) à génération de granules aérobies dans une configuration de flux continu, pour le traitement biologique de biomasse sous forme d'eaux usées urbaines ou industrielles, comportant :
- une entrée (19) ;
- un premier bassin de tête (11) normalement opéré en conditions anaérobies ;
- un deuxième bassin (12) ayant une fonction de sélecteur biologique de microorganismes favorables à la formation de structures denses telles que des granules et un troisième bassin (13) ;
- un ouvrage de clarification (14) pourvu d'une première sortie pour un effluent et d'une seconde sortie pour une recirculation de boues (15) vers l'entrée (19) du réacteur (1) ;
- un sélecteur physique ou gravitaire (18) inséré entre l'ensemble des deuxième et troisième bassins (12, 13) d'une part et l'ouvrage de clarification (14) d'autre part.

Le deuxième bassin (12) est subdivisé en un premier compartiment (12A) configuré pour être opéré successivement et alternativement en conditions aérobies et anaérobies, en mode festin et en un second compartiment (12B) configuré pour être opéré de façon continue en conditions aérobies, en mode festin, de sorte que l'on puisse prolonger ou étendre l'anaérobiose du premier bassin de tête (11) dans le premier compartiment du deuxième bassin (12), et effectuer une prolongation correspondante de la mise en réserve de DCO facilement biodégradable sous forme de polymères.

Le troisième bassin (13) est configuré pour être piloté en conditions aérobies ou anoxiques, en mode famine.

Le sélecteur physique ou gravitaire (18) est apte à sélectionner des particules à vitesse de sédimentation élevée d'au moins 2 m/h, de préférence d'au moins 3 m/h, et à effectuer une recirculation (25) de celles-ci vers l'entrée (19) du réacteur (1).

## Description

### Objet de l'invention

La présente invention se rapporte à un procédé de traitement d'eaux usées municipales ou industrielles utilisant la technologie des boues granulaires aérobies (*aerobic granular sludge*, AGS).

### Arrière-plan technologique et état de la technique

Le traitement des eaux usées à l'échelle industrielle fait largement appel à des procédés biologiques à cultures libres en phase aérobie, ce qui implique des coûts énergétiques importants pour l'aération des bassins et des surfaces au sol très grandes pour le processus de clarification. Néanmoins, ces procédés présentent des performances de traitement inégalées.

Un nouveau type de traitement issu des travaux de l'Université de Delft est apparu il y a une vingtaine d'années, qui met en œuvre des cultures granulaires aérées dans lesquelles les micro-organismes épurateurs se présentent sous forme d'agglomérats de 0,2 à 4 mm. Ces particules comportent chacune des zones spécifiques propices au traitement des différents polluants (carbone, azote, phosphore). La technologie des boues granulaires aérobies (AGS) est un procédé de traitement biologique des eaux usées compact et économe en énergie.

Dans ce contexte, on entend par régime de festin-famine des périodes d'alimentation courtes sélectionnées pour créer des périodes de festin et de famine (J.J. Beun et al., Aerobic granulation in a sequencing batch reactor, Water Research, Vol. 33, No. 10, 1999, pp. 2283-2290), caractérisées respectivement par la présence ou l'absence de matière organique dans le milieu liquide. Avec cette stratégie d'alimentation, la sélection des micro-organismes appropriés pour former des granules est obtenue. Lorsque la concentration du substrat dans le liquide brut est élevée, les organismes formant des granules peuvent stocker la matière organique sous forme de poly(β-hydroxybutyrate) (PHB) intracellulaire qu'ils consomment pendant la période de famine, ce qui leur donne un avantage compétitif sur les organismes filamenteux.

Le principal écueil de ce procédé est lié à sa mise en route, qui repose sur la formation d'un véritable biofilm en suspension (ou auto-supporté), sans aucun support.

D'après les premiers retours d'expérience, ce type de culture, en phase aérobie, permettrait d'obtenir les mêmes performances que le traitement classique par « boues activées » CAS (pour *Conventional Activated Sludge*), tout en réduisant la consommation énergétique (jusqu'à - 25%) et l'emprise au sol. De plus, l'étape de clarification des eaux traitées est fortement simplifiée vu la parfaite décantabilité des granules. Il s'agit donc d'un traitement appelé à s'imposer dans le futur, vu la pression sur le coût d'exploitation des stations actuelles. Ce procédé est basé sur la mise en place d'un régime hydraulique d'alimentation spécifique, lequel est couplé à une purge sélective de la biomasse. Paradoxalement, seules quelques entreprises commerciales de traitement des eaux semblent s'y intéresser, la plus notable étant le groupe d'ingénierie hollandais Royal HaskoningDHV.

Il n'y a ainsi que très peu de technologies AGS disponibles dans le commerce qui utilisent des réacteurs séquentiels discontinus (SBR). De nombreuses installations de traitement des eaux usées existantes sont constituées de longs réacteurs à écoulement continu qui ne seraient pas facilement adaptés à un rétrofit en SBR. Par conséquent, un procédé à flux continu est préférable pour les municipalités qui ne peuvent pas investir raisonnablement dans une technologie SBR disponible dans le commerce.

Le document US 2020/0048131 A1 (Ovivo Inc., Montreal, CA) divulgue un procédé de traitement des eaux usées à boues granulaires/floculantes à flux continu qui sélectionne la biomasse granulaire capable d'éliminer l'azote et le phosphore et qui contrôle la taille des granules et la concentration des boues granulaires et floculantes pour une élimination optimale des éléments nutritifs, organiques et solides dans un encombrement réduit. Ce procédé comprend des zones de traitement anaérobie, anoxique et aérobie, un premier réacteur chargé en DCO biodégradable hautement soluble fonctionnant dans des conditions anaérobies ou anoxiques, un trieur de boues granulaires avec recyclage des boues granulaires de sousverse vers le premier réacteur (anaérobie/anoxie de tête), un clarificateur secondaire pour décanter les boues floculantes et les particules, et un système de recyclage des boues floculantes de sousverse venant du clarificateur secondaire vers une zone de traitement aérobie pour donner un avantage compétitif aux granules. L'évacuation des boues des deux lignes de recyclage distinctes contrôle les concentrations de boues floculantes et granulaires de bioprocédé et les SRTs (solid rétention time). Les flux de contournement (bypass) et de recyclage vers le trieur, pour maintenir le flux souhaité dans diverses conditions de flux influent, aident à contrôler la taille des granulés. Le fonctionnement du mélangeur en marche/arrêt des réacteurs anaérobie et anoxique peut être utilisé. Il y a possibilité de purger les boues sur les deux lignes de recirculation pour contrôler le ratio flocs/granules. Le trieur est équipé d'un by-pass et d'une recirculation pour contrôler le flux ascensionnel.

Ce document mentionne le découpage du bassin biologique en un petit compartiment aéré (festin aérobie) et un grand compartiment aéré (famine aérobie). Il exploite la sécurisation de la famine mais n'envisage pas une gestion dynamique de l'aération.

Selon le document WO 2019/195918 A1 (University of Manitoba, Winnipeg, CA), l'expérimentation en laboratoire et à l'échelle pilote a démontré qu'une granulation stable peut être obtenue dans une configuration en flux continu appropriée pour une mise à niveau dans une infrastructure existante. Une configuration anoxique/anaérobie/aérobie peut être conçue et mise en oeuvre de manière stable pour la conversion de la biomasse floculante en AGS. Les résultats préliminaires à l'échelle pilote sur les effluents primaires d'une installation municipale de traitement des eaux usées ont indiqué que des granulés de 0,2-0,5 mm, SVI <75 mL/g et SVI(30 min)/SVI(5 min)> 70% peuvent se former en un mois de fonctionnement stable.

Ce document décrit un réacteur comprenant successivement un compartiment anoxique de tête, anaérobie (point d'alimentation) et aérobie. La zone aérobie est divisée en deux compartiments aérobies, un premier compartiment (10 à 30% du volume) assurant une zone de festin et un second compartiment, plus grand assurant une zone de famine (70 à 90% du volume). Un concept de purge sélective est également décrit.

Ces brevets sont exclusivement applicables aux réacteurs continus.

Le document WO 2008/141413 A1 divulgue un système de traitement des eaux usées utilisant des granules aérobies qui comporte un grand nombre de réacteurs discontinus de séquençage avec un taux d'échange volumétrique élevé, une durée de cycle variable et un volume de lot constant. Les réacteurs discontinus fonctionnent pour l'élimination de C, N et P est éliminé chimiquement. Les solides en suspension sont éliminés dans une étape de séparation en aval. Un réacteur à écoulement continu peut comprendre une zone aérobie, une zone alternativement aérobie et anoxique ou des zones aérobie et anoxique discrètes, ainsi qu'une zone de décantation. Une zone anaérobie peut être située au fond d'une masse de granulés décantés. L'alimentation peut être introduite à travers les granulés décantés. Une zone aérobie / anoxique peut être comme un CSTR (*Completely Stirred Tank Reactor*) mais avec une aération variant dans l'espace ou dans le temps. Les granules de boue peuvent se déplacer par intermittence d'une zone aérobie à une zone aérobie / anoxique. Une zone de décantation peut avoir un débit ascendant pour laver la biomasse floculée. Un procédé par boues double peut être utilisé dans lequel une fraction de floc non décanté est recyclée vers une région en amont du décanteur de granules. Une zone de fermentation peut être utilisée pour prétraiter l'eau d'alimentation ou pour traiter un flux de déchets recyclés, par exemple un flux de déchets contenant du floc.

### Buts de l'invention

La présente invention vise à fournir un réacteur et un procédé pour le traitement de biomasse sous forme d'eaux usées municipales ou industrielles principalement, utilisant la technologie des boues granulaires aérobies, qui puisse être performant en fonctionnement à flux continu, en comparaison des procédés/réacteurs conventionnels (CAS, MBR, MBBR, IFAS, MB-MBR, etc.) ou concurrents (SBR granulaires).

En particulier, l'invention vise à mettre au point des conditions de procédé qui permettent une formation stable de granules BNR (éliminant les nutriments) et par conséquent une bonne décantation des boues traitées.

La présente invention a encore pour but de se doter d'un ou plusieurs outils de suivi de l'évolution de la biomasse dans le réacteur.

### Principaux éléments caractéristiques de l'invention

La présente invention se rapporte à un réacteur à génération de granules aérobies dans une configuration de flux continu, pour le traitement biologique de biomasse sous forme d'eaux usées urbaines ou industrielles, comprenant successivement, de l'amont vers l'aval :
- une entrée pour les eaux usées avec au moins un ouvrage de prétraitement ;
- un premier bassin de tête normalement opéré en conditions anaérobies;
- un deuxième bassin suivi d'un troisième bassin, ces bassins pouvant être au moins partiellement opérés en conditions aérobies ;
- un ouvrage de clarification pourvu d'une première sortie pour un effluent et d'une seconde sortie pour une recirculation de boues vers l'entrée du réacteur ;
- un sélecteur physique ou gravitaire inséré entre l'ensemble des deuxième et troisième bassins d'une part et l'ouvrage de clarification d'autre part, ledit sélecteur physique ou gravitaire étant apte à sélectionner des particules à vitesse de sédimentation élevée d'au moins 2 m/h, de préférence d'au moins 3 m/h, et à effectuer une recirculation de celles-ci vers l'entrée du réacteur ;
caractérisé en ce que :
- le deuxième bassin a une fonction de sélecteur biologique de microorganismes favorables à la formation de structures denses telles que des granules, ledit deuxième bassin étant subdivisé en deux compartiments, un premier compartiment configuré pour être opéré successivement et alternativement en conditions aérobies et anaérobies, en mode festin, de sorte que la biomasse soit exposée de manière dynamique à une alternance de conditions oxydantes et réductrices respectives, et de sorte que l'on puisse prolonger ou étendre l'anaérobiose du premier bassin de tête dans ledit premier compartiment du deuxième bassin, et effectuer une prolongation correspondante de la mise en réserve de DCO facilement biodégradable sous forme de polymères, et un second compartiment configuré pour être opéré de façon continue en conditions aérobies en mode festin ; et en ce que :
- ledit troisième bassin est configuré pour être piloté en conditions aérobies ou anoxiques, en mode famine.

L'utilisation en alternance de conditions anaérobies et aérobies est bien enseignée par l'état de l'art dans le but de sélectionner les métabolismes déphosphatants mais n'est pas une condition suffisante pour granuler ou densifier la biomasse comme le démontre l'exploitation des procédés à boue activée conventionnelle.

On notera que, contrairement à l'invention, WO 2018/141413 A1 (voir en particulier la figure 10) ne donne pas d'élément de dimensionnement en ce qui concerne le deuxième bassin (normalement aérobie) et n'envisage pas une extension du premier bassin anaérobie en exploitant ce deuxième bassin en mode anaérobie.

Il est également important de rappeler que la sélection de microorganismes filamenteux ou denses est conditionnée par les concentrations des polluants en contact direct avec la biomasse (festin, famine) et le type d'accepteurs d'électron présent dans le milieu. En particulier, les conditions d'anoxie (présence d'oxygène lié dans les nitrites ou les nitrates) sont à distinguer des conditions anaérobies strictes (absence d'oxygène, nitrites, nitrates).

L'alternance de bassins en aérobie/anoxie décrite dans WO 2018/141413 A1 (figure 10) ne correspond pas à l'objectif de la présente invention, mais à une configuration favorable à l'élimination de l'azote total par nitrification (aérobie) - dénitrification (anoxie).

La présente invention repose en effet sur la mise en place d'un deuxième bassin compartimenté qui permet :
(1) d'accroître les cinétiques de mise en réserve de la DCO facilement biodégradable (DCO_{fbio}) via une possible extension dynamique du temps de contact anaérobie en fonction de la charge traitée, grâce à une absence d'aération dans le premier compartiment du deuxième bassin, en opérant le premier compartiment du deuxième bassin en anaérobie lors de pics de charge. Le temps de contact du premier compartiment du deuxième bassin est de préférence faible (par exemple ∼ 10 min) de façon à minimiser la production de nitrites et nitrates (par exemple <0.5 mg/L) et garantir des conditions anaérobies strictes dans le deuxième bassin lors de l'arrêt des phases aérées ;
(2) d'éviter une fuite de la DCO_{fbio} dans le troisième bassin aérobie en mode famine en augmentant les rendements de mise en réserve de la DCO_{fbio} dans les deux premiers bassins dans des conditions de festin anaérobie et aérobie (le deuxième compartiment du deuxième bassin étant toujours opéré en conditions aérobies).

Les conditions de festin sont toujours présentes dans le premier bassin anaérobie et le premier compartiment opéré en conditions aérobies du deuxième bassin. C'est la compartimentation du deuxième bassin qui permet d'assurer des conditions de festin aérobie suivi d'une famine aérobie (ou anoxique) dans le troisième bassin.

Selon des modes particuliers de l'invention, le réacteur comporte en outre au moins une des caractéristiques suivantes ou une combinaison appropriée de plusieurs d'entre elles :
- le premier compartiment et le second compartiment du deuxième bassin sont de même taille, chacun de ces compartiments étant plus petit que le troisième bassin ;
- la répartition des tailles relatives des bassins par rapport au volume disponible sont respectivement de 20 à 30% pour le premier bassin, de 5 à 10% pour le deuxième bassin et de 60 à 75% pour le troisième bassin ;
- le troisième bassin est lui-même configuré, ou suivi d'un quatrième bassin configuré pour effectuer une nitrification et une dénitrification simultanées ;
- le réacteur comporte un bypass pour limiter la charge hydraulique sur le sélecteur physique ou gravitaire.

La présente invention se rapporte également à un procédé pour le traitement biologique d'eaux usées urbaines ou industrielles au moyen du réacteur à génération de granules aérobies dans une configuration de flux continu, tel que décrit ci-dessus, caractérisé en ce qu'il comporte au moins les étapes successives suivantes, dans le sens de l'amont vers l'aval :
- on introduit les eaux usées à l'entrée du réacteur à flux continu ;
- on traite les eaux usées dans le premier bassin de tête opéré en conditions anaérobies ;
- on traite les eaux usées, sortant du premier bassin, dans le deuxième bassin ayant une fonction de sélecteur biologique de microorganismes favorables à la formation de structures denses telles que des granules ; plus précisément on opère le premier compartiment selon une gestion dynamique de la fourniture d'oxygène, c'est-à-dire de manière à exposer la biomasse successivement de façon alternée à des conditions aérobies et anaérobies, en mode festin, et on opère le second compartiment de façon continue en conditions aérobies, en mode festin. On travaille en conditions aérobies continues dans le second compartiment du deuxième bassin, qui est plus petit que le troisième bassin, afin de sécuriser des conditions de famine dans ce dernier ;
- on traite les eaux usées sortant du deuxième bassin dans le troisième bassin opéré en conditions aérobies ou anoxiques, en mode famine ;
- dans le sélecteur physique ou gravitaire, on laisse sédimenter les granules et on procède à la recirculation d'une fraction de ces granules à l'entrée du réacteur à flux continu ;
- dans l'ouvrage de clarification, on laisse sortir un effluent du réacteur à une première sortie et on procède, à une deuxième sortie, à une recirculation des boues, dont une partie est purgée, vers l'entrée du réacteur à flux continu ;
ledit procédé étant caractérisé en ce que, par la gestion dynamique de la fourniture d'oxygène, la phase d'anaérobiose ayant lieu dans le premier bassin de tête est prolongée/étendue dans ledit premier compartiment du deuxième bassin, selon un temps de séjour hydraulique choisi pour, d'une part, effectuer une augmentation du rendement de mise en réserve de la DCO facilement biodégradable sous forme de polymères tout en limitant la fuite de ladite DCO facilement biodégradable dans le troisième bassin et pour, d'autre part, pour minimiser la production de nitrites et nitrates.

Selon des modes particuliers de l'invention, le procédé comporte en outre au moins une des caractéristiques suivantes ou une combinaison appropriée de plusieurs d'entre elles :
- ladite gestion dynamique de la fourniture d'oxygène se base sur la mesure, dans le premier compartiment du deuxième bassin, de la teneur en oxygène dissous, qui est le paramètre permettant de basculer du mode de fonctionnement aérobie dans le mode de fonctionnement anaérobie et vice versa ;
- le temps de séjour hydraulique dans le premier compartiment du deuxième bassin est compris entre 5 et 30 minutes ;
- les polymères de réserve sont des PHA ;
- la prolongation/l'extension de la phase d'anaérobiose dans ledit premier compartiment du deuxième bassin est effectuée en cas de pointes de charge ;
- on modifie le taux de recirculation des boues dans l'ouvrage de clarification en vue de faire varier et contrôler la vitesse ascensionnelle dans le sélecteur physique ou gravitaire et donc la pression de sélection des granules ;
- un monitoring de l'abondance d'un microorganisme formant des flocs, par exemple *Zoogloea spp.,* est effectué pour détecter un dysfonctionnement du sélecteur biologique.

### Brève description des figures

La figure 1 représente comparativement les schémas respectifs de fonctionnement d'un procédé conventionnel par boue activée (figure 1A) et du procédé de traitement selon l'invention (figure 1B).
La figure 2 représente le schéma de principe du procédé selon l'invention.
La figure 3 montre des micrographies en contraste de phase des biomasses obtenues avec le procédé selon l'invention, avec un grossissement 4x, avec (figure 3A) et sans (figure 3B) ouvrage de sélection biologique
La figure 4 montre l'évolution de l'indice volumique des boues mesuré après 30 minutes (SVI₃₀) et des cinétiques de mise en réserve (qXAO) lors des essais sur réacteur pilote selon l'invention avec (figure 4A) ou sans (figure 4B) sélecteur biologique.
La figure 5 montre la vitesse ascensionnelle dans l'ouvrage de tri (vitesse de sélection) et la pression de sélection associée à l'élimination des particules les moins denses (MES sortie trieur/sélecteur physique).
La figure 6 montre des micrographies en contraste de phase, en grossissement 4x (barre d'échelle : 500 microns), de l'inoculum et des biomasses en fin de chaque phase expérimentale (I, II, IIIa et b, IVa et b, V et VI).

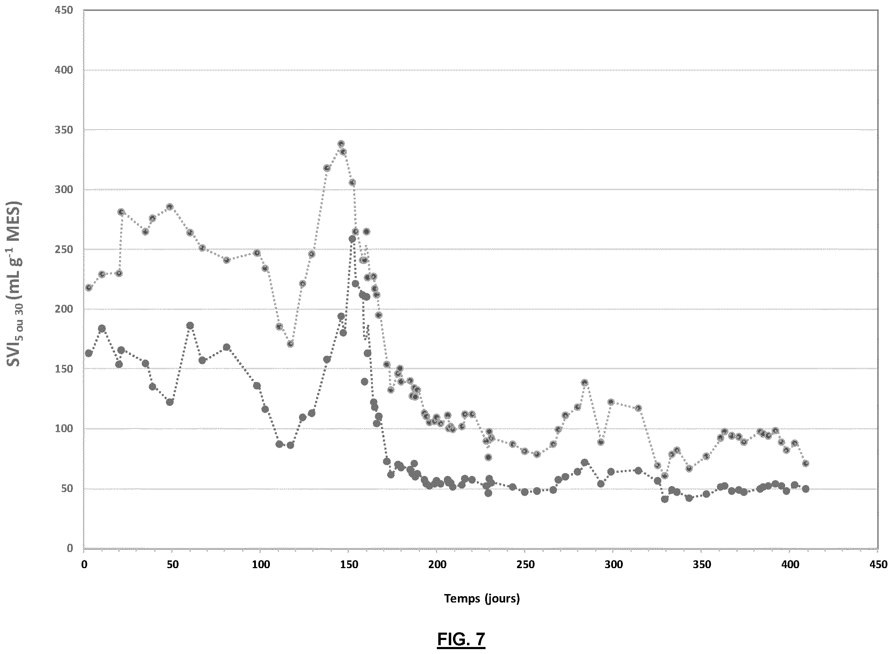

La figure 7 montre l'évolution de l'indice volumique des boues, pendant la période de mise en service du réacteur, respectivement mesuré après 5 (SVI₅ en haut) et 30 minutes (SVI₃₀ en bas).
La figure 8 montre l'évolution des cinétiques de mise en réserve (qXAO) lors des essais sur réacteur pilote.
La figure 9 montre les débits horaires et les concentrations en DCO en entrée de la station pilote respectivement durant les phases IVa (figure 9A) et IVb (figure 9B).
La figure 10 est une cartographie de la dynamique des populations microbiennes durant les différentes phases des essais (Jour 1 = 21/9/2018). Chaque nombre indique le pourcentage de « reads » qui peut être attribué à un microorganisme.

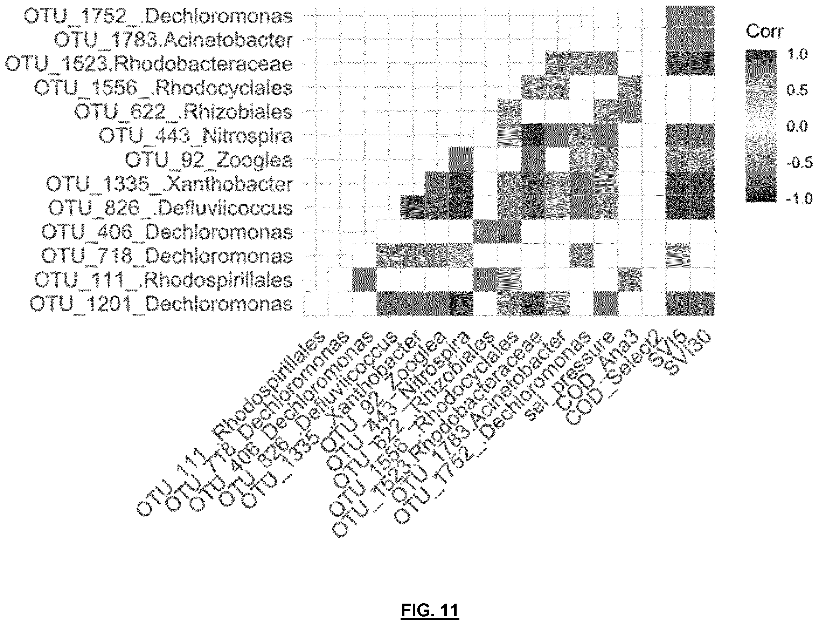

La figure 11 montre les corrélations (C) de Spearman r (avec une valeur p <0.05) pour les OTUS présentant une abondance de « read » supérieure à 1%, la pression de sélection appliquée sur le trieur/sélecteur physique (sel_pressure en m/h), la DCO soluble respectivement dans le troisième compartiment anaérobie (COD_Ana3) et le deuxième compartiment du sélecteur biologique (COD_Select2), le SVI mesuré respectivement après 5 (SVI5) et 30 minutes (SVI30). L'échelle colorimétrique correspond aux valeurs respectives r : 0.0 à 0.19 'C très faible' ; 0.20-0.39 'C faible' ; 0.40-0.59 'C modéré ; 0.60-0.79 'C forte ; 0.80-1.0 'C très forte'.

### Description d'une forme d'exécution préférée de l'invention

Le procédé selon la présente invention consiste à mettre en œ uvre une technologie de traitement biologique utilisant des granules dans une configuration en flux continu présentant une série d'avantages par rapport aux procédés conventionnels (CAS, MBBR, IFAS, MBR, etc.) ou concurrents (SBR granulaires).

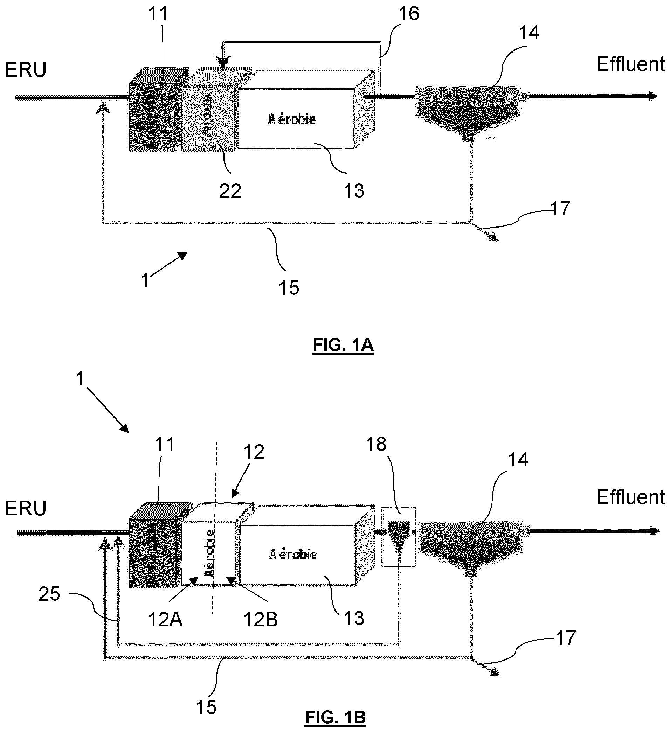

Les stations d'épuration à boue activée conventionnelle (ex. : procédés UCT, A₂O, Bardenpho) sont conçues via une succession d'ouvrages dont les principaux sont repris ci-dessous (FIG. 1A) :
- prétraitements (non représenté) ;
- premier bassin biologique opéré en conditions anaérobies 11 ;
- deuxième bassin biologique opéré en conditions anoxiques 22 ;
- troisième bassin biologique opéré en conditions aérobies13 ;
- ouvrage de clarification (ou décanteur) 14.

Le procédé selon l'invention s'intégrera dans ce schéma fonctionnel de base (FIG. 1B).

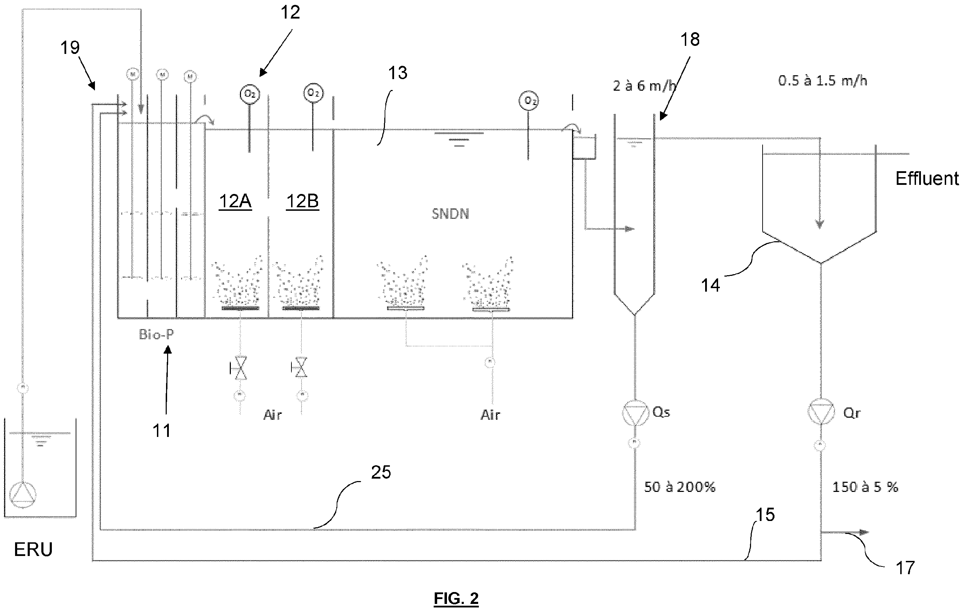

Mais, selon l'invention, le développement de granules aérobies va nécessiter la mise en place de deux ouvrages additionnels spécifiques (FIG. 2) assurant deux types de pression de sélection sur la biomasse conventionnelle :
- un bassin 12, subdivisé en deux compartiments 12A, 12B, pour effectuer une sélection biologique des microorganismes favorables à la formation de structures denses ;
- un sélecteur physique (ou gravitaire) 18 pour assurer la séparation des particules caractérisées par des vitesses de sédimentation élevée.

### Sélection biologique

En boues activées conventionnelles (CAS), le concept de sélection métabolique et cinétique a été largement exploité pour cultiver spécifiquement certains types de bactéries fonctionnelles, et ce, dans le but d'optimaliser l'élimination des nutriments (N, P) ou encore d'éviter le foisonnement de bactéries filamenteuses. Dans ce but, les stations d'épuration à boues activées conventionnelles (par exemple procédés UCT, A₂O, Bardenpho) sont conçues selon une succession de bioréacteurs (anaérobie, anoxie, aérobie). Classiquement, les actions préventives pour lutter contre le développement de bactéries filamenteuses sont basées sur la mise en place de bassins-contacts (*biological selectors*) additionnels en tête de station pour des effluents particulièrement fermentescibles. Ces ouvrages ont un effet très marqué et non-linéaire sur la décantabilité des boues. La conception de ces bassins repose sur un temps de contact suffisant pour permettre à la DCO soluble facilement biodégradable (DCO_{fbio}) de diffuser et d'être assimilée préférentiellement par les bactéries de morphotypes floculants, lesquelles sont en compétition avec les filaments pour les mêmes substrats. Néanmoins, un temps de contact inadapté (à la suite de variations du débit horaire à traiter) a pour conséquence des concentrations en DCO_{fbio} trop faibles ou un temps de réaction trop court avec la biomasse, lesquels favorisent la sélection de microorganismes filamenteux. Cette prédisposition à la sélection de microorganismes filamenteux ou denses est également conditionnée par le type d'accepteurs d'électrons présent dans le milieu. On distingue également trois conditions de fonctionnement d'un bioréacteur : aérobie (en absence d'oxygène moléculaire), anoxie (en présence d'oxygène lié comme dans les nitrites ou les nitrates) et anaérobie stricte (en absence d'O₂, de nitrites et nitrates).

L'originalité du procédé selon l'invention est de combiner un compartiment anaérobie de tête 11 dédié à l'élimination biologique du phosphore par suraccumulation (EPBR) avec un second compartiment 12 ou 12A/12B à même de réaliser une sélection cinétique de la biologie, et ce indépendamment des variations horaires de charges ou de débits. Concrètement, cette structuration des flocs est obtenue par l'installation de rampes d'aération et d'une instrumentation *ad hoc* (pO2) permettant une gestion dynamique des conditions d'oxydoréduction dans le deuxième bassin biologique qui aura été préalablement compartimenté. Le temps de séjour hydraulique de ce compartiment et la gestion sont tels que la production de nitrites et de nitrates est évitée (conditions anaérobies strictes en absence d'aération).

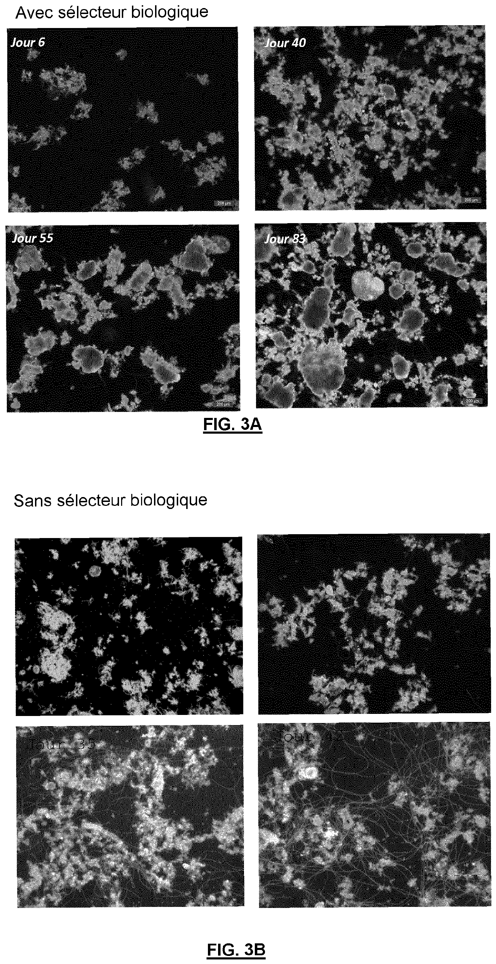

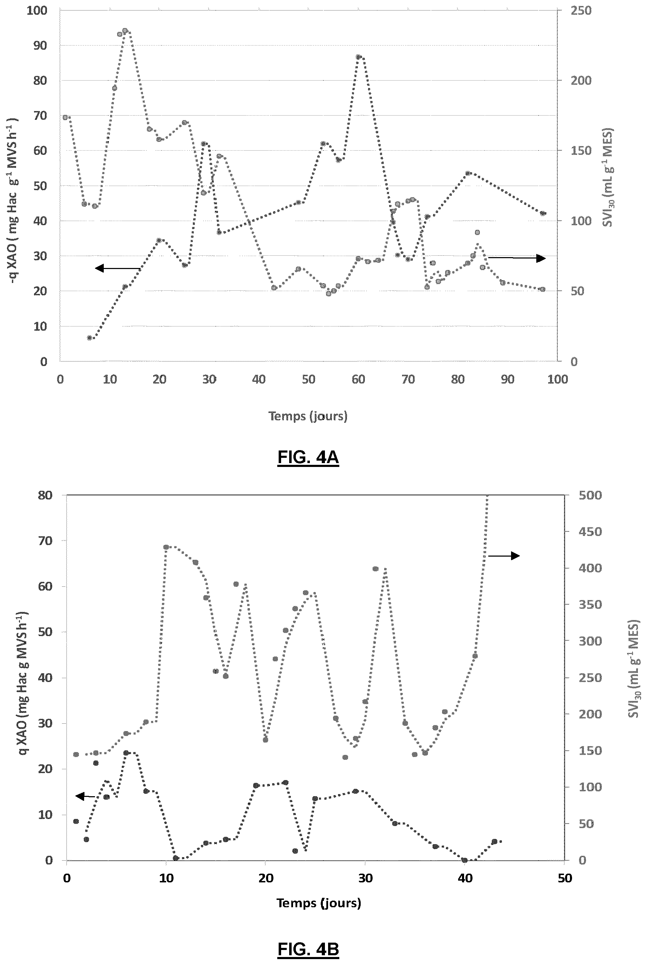

Les essais réalisés sur un pilote de laboratoire traitant des eaux résiduaires urbaines (ERU) concentrées ont permis de montrer qu'une biomasse exposée à une alternance de conditions anaérobies et aérobies au niveau du deuxième bassin biologique permettait de générer des flocs denses, de grandes tailles, enrichis en organismes déphosphatants. Combiné à un ouvrage de tri microbien, les propriétés de sédimentation des boues sont ainsi drastiquement améliorées. On parle de tri microbien puisque l'objectif du sélecteur physique est de maintenir spécifiquement dans le système les particules caractérisées par de plus grandes vitesses de sédimentation. Ce tri induit donc la rétention plus ou moins efficace d'agrégats biologiques dans le système et des âges de boues différents en fonction du couple taille/densité. En conséquence, certaines bactéries se retrouvent préférentiellement retenues dans le système comme, par exemple, les PAO/GAO. 40 jours après la mise en service du réacteur pilote (inoculum : boue activée floculante), les premières structures granulaires sont visibles (FIG. 3A). Relativement denses, ces structures évoluent vers des granules caractérisés par un SVI₃₀ inférieur à 70 mL g⁻¹ (FIG. 4A). Cette densification de la biomasse est réalisée grâce à la mise en place de conditions favorables à la sélection de métabolismes de mise en réserve. Concrètement, la DCO_{fbio} est stockée sous la forme de polymères de réserve en conditions anaérobies (PHA). En cas de diminution du rendement de mise en réserve en anaérobie (ex. pointes de charge), le sélecteur biologique assure une dégradation de la fraction résiduelle en DCO_{fbio} en conditions de festin aérobies, également favorable à la mise en réserve de la DCO_{fbio} sous forme PHA.

La capacité des bactéries à stocker la DCO_{fbio} en polymères de réserve a été évaluée en mesurant (essais batch) la vitesse de spécifique de consommation (-q_{XAO}) de l'acétate en anaérobiose. Les résultats obtenus montrent l'importance du sélecteur biologique (FIG. 3A et FIG. 3B) sur ce paramètre. De fait, en absence de sélecteur biologique le SVI se détériore très rapidement à la suite du développement de bactéries filamenteuses. Ces observations permettent de conclure que l'ouvrage de tri microbien (sélecteur physique) ne permet pas à lui seul de conduire à un procédé granulaire stable (voir ci-dessous).

### Sélection physique

La structuration des flocs obtenue par pression de sélection environnementale favorise la mise en place d'une sédimentation discrète conduisant à une ségrégation de la biomasse dans un ouvrage hydraulique adapté 18 (tri microbien). Concrètement, il s'agit d'un ouvrage de sédimentation dans lequel les particules les plus denses sont collectées et recirculées en tête de station. *A contrario*, les flocs les plus lâches sont transférés vers l'ouvrage de clarification et sont progressivement purgés.

### RESULTATS

### 1. Essais et résultats process

Dans le cadre du projet selon l'invention, l'objectif est d'investiguer une configuration de traitement inédite adaptée à des eaux usées résiduaires urbaines (ERU) régulièrement diluées par des événements pluvieux ou par une problématique d'infiltration/exfiltration au niveau du réseau de collecte. Le Tableau 1 décrit les principales conditions de fonctionnement testées durant les essais. Le plan d'expérience a été découpé en 3 étapes de façon à :
- optimiser le couplage entre la sélection biologie et le trieur sur eau diluée (Périodes ou phases I à III) ;
- étudier la résilience du procédé aux pointes de charges (Période ou phase IV) ;
- optimiser la gestion dynamique des conditions d'oxydoréduction au niveau du sélecteur biologique (Périodes ou phases V et VI).

**Tableau 1 : Paramètres de fonctionnement du pilote et du trieur**

| | | I | II | IIIa | IIIb | Iva | Ivb | V | VI |
|---|---|---|---|---|---|---|---|---|---|
| | | | | Aérobie | ANDN | Poi ntes | | Recovery | Nominale |
| | | 1 - 152 | 153 - 158 | 159-174 | 174-222 | 223-257 | 258-281 | 282-354 | 355 - 430 |
| **HRT** | Heures | 10 | 30 | 30 à 5 | | 6 | 6 | 7 | 8 à 4 |
| **Cv moyen** | kg DCO m⁻³ j⁻¹ | 1.0 | 1.0 | 1.0 | | 0.9 | 1.5 | 1.3 | 0.6 à 1.5 |
| **Cm moyen** | kg DCO kg⁻¹ MVS j⁻¹ | 0.360 | 0.278 | 0.276 | 0.223 | 0.303 | 0.413 | 0.465 à 0.325 | 0.134 à 0.334 |
| **DCO** | mgO₂/L | 400 | 1300 | 1300 à 450 | 450 à 250 | 160 à 300 (P) | 315 à 390 (P) | 370 | 200 |
| **Temps de contact Anaérobie** | min | 80 | 90 | 45 | | 36 | 36 | 38 | 42 à 21 |
| **Temps de contact sélecteur** | min | 25 | 30 | 15 | | 12 | 12 | 13 | 14 à 7 |
| **Pression de sélection** | m/h | 1.20 | 0.62 | 0.62 à 2.50 | | 2.2 à 3.8 (P) | 2.2 à 3.8 (P) | 1.95 | 1.6 à 3.4 |
| **SRT moyen** | jours | 20 | 20 | 30 | 25 | 20 | 11 | 10 à 20 | 20 - 10 - 20 |
| **SRT aéré** | jours | 16 | 16 | 24 | 12 | 9 | 5 | 8 à 16 | 16-8-16 |
| **Cv pointe** | kg DCO m⁻³ j⁻¹ | - | - | - | | 2.2 | 2.7 | - | - à 2.7 |

Durant les essais, les concentrations moyennes en N-NH₄ et en P-PO₄ étaient respectivement de ∼ 35 mg/L et ∼ 6 mg/L.

Le réacteur biologique (142 Litres) est composé d'une série de compartiments repris ci-dessous (non représentés) :
- anaérobie 1 ;
- anaérobie 2 ;
- anaérobie 3 ;
- biosélecteur 1 ;
- biosélecteur 2 ;
- aérobie.

Le design de l'ouvrage de tri microbien a été amélioré de façon à :
- assurer une dispersion radiale de la boue en entrée de l'ouvrage de tri ;
- éviter un phénomène de floculation sur les parois du prototype ;
- favoriser un régime de Stokes afin de trier les particules sur base du couple taille/densité ;
- faciliter la reprise des boues denses par une pompe de recirculation.

Le réacteur a été mis en service afin de valider les conditions de démarrage sur un effluent urbain dilué (période I). L'*inoculum* est une boue activée issue de la station d'épuration de Liège-Oupeye, Région wallonne, Belgique (MES = 4.4 g/L, SVI₅ = 218 mL/g, SVI₃₀ = 163 mL/g).

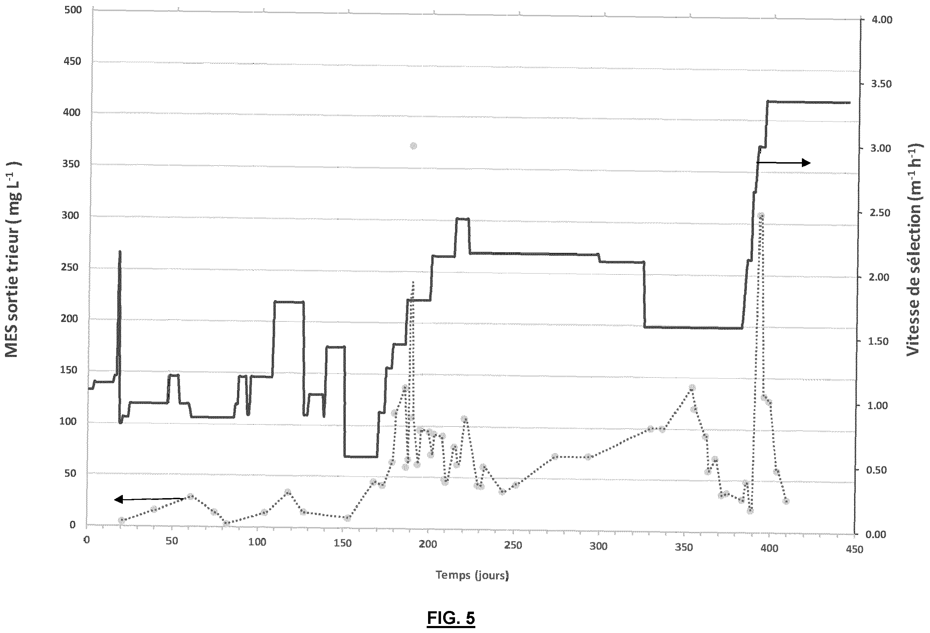

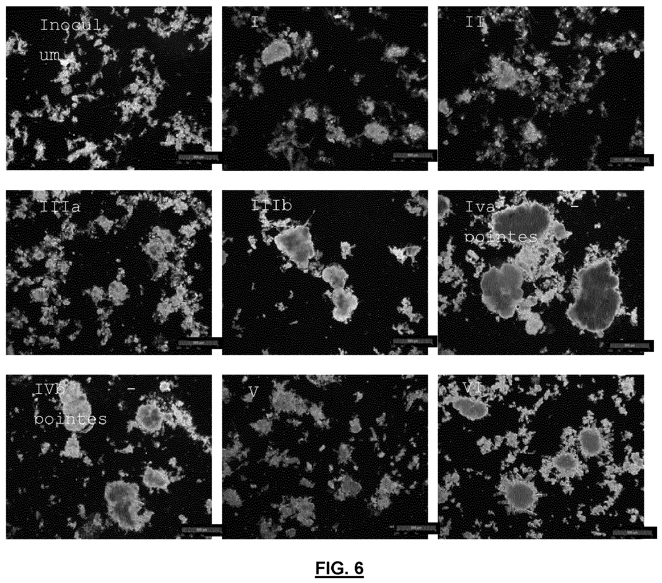

Après une phase de démarrage et tâtonnement, le pilote a été exploité de façon à identifier l'influence de différents paramètres qui pourraient être à l'origine des dysfonctionnements observés, tels que les temps de contact (aérobie, anaérobie), l'impact des retours en nitrates ou encore la durée d'épaississement dans le trieur. Les résultats obtenus durant les phases III ont montré qu'une réduction des temps de contact dans les compartiments anaérobies et dans le sélecteur biologique aérobie étaient les paramètres les plus impactants sur la qualité des boues obtenues. Une augmentation progressive de la pression de sélection dans le trieur (FIG. 5), tout en maintenant les temps de contacts constants (anaérobie : 45 min ; sélecteur aéré : 15 min), a permis de développer des granules stables (FIG. 6 ; IIIb) pour un régime hydraulique stationnaire.

Durant la période IIIb, les boues granulaires présentent des propriétés morphologiques et physico-chimiques stables. Le diamètre des granules varie entre 0.2 et 0.6 mm. Les performances épuratoires ont été estimées sur base d'échantillons ponctuels. Elles sont stables avec une élimination de plus de 90 % de la DCO totale, de 95 % sur l'azote ammoniacal et de 81 % sur l'azote total. La concentration moyenne en MES en sortie du clarificateur était de 20.4 mg/L.

Durant la phase IVa, des bilans épuratoires ont été établis et des prélèvements hebdomadaires ont été réalisés en entrée de l'installation pilote pour déterminer avec précision la charge reçue par l'ouvrage selon l'invention. Les paramètres analysés étaient les MES, DCO totale et soluble, azote Kjeldahl total (TKN), N-NH₄, N-NO₃, N-NO₂, azote total (par calcul), P-PO₄ (o) et Pₜₒₜ conformément aux standards internationaux (APHA 2005).

Le Tableau 2 présente les performances épuratoires moyennes durant la période IVa. La température moyenne était de 20°C.

**Tableau 2: Performances épuratoires moyennes durant la phase IVa. Échantillonnage moyen 24 heures (n=3)**

| **Paramètres** | **Influent** | **Effluent** | **Épuration** |
|---|---|---|---|
| | mg/L | mg/L | % |
| DCO | 185 | 35 | 81 |
| DCOs | | 27 | 85 |
| Nₜₒₜ | 28 | 6.8 | 76 |
| N_{KJ} | | 2.9 | 90 |
| N-NH4 | | 2.3 | 92 |
| N-NO3 | | 3.9 | |
| P_{TOT} | 4.8 | 1.9 | 60 |
| P-PO₄ | | 1.4 | 71 |
| MES | | 9 | |

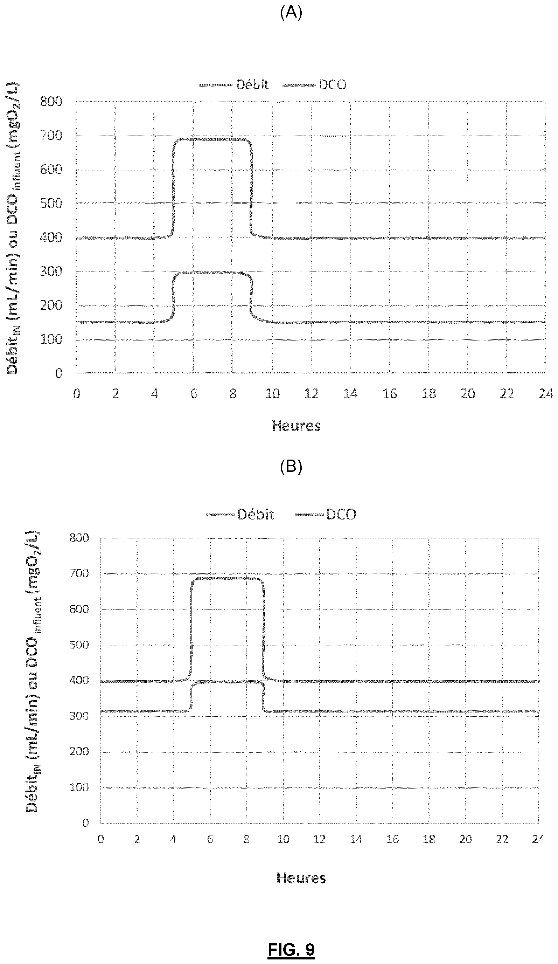

Durant la phase IVb, la charge organique journalière à traiter a été augmentée de 66% tout en maintenant un profil hydraulique journalier identique à la phase IVa (FIG. 9).

Durant les phases V et VI, le mode de gestion du sélecteur biologique (1^{er} compartiment) a été adapté de façon à augmenter la pression de sélection métabolique et cinétique.

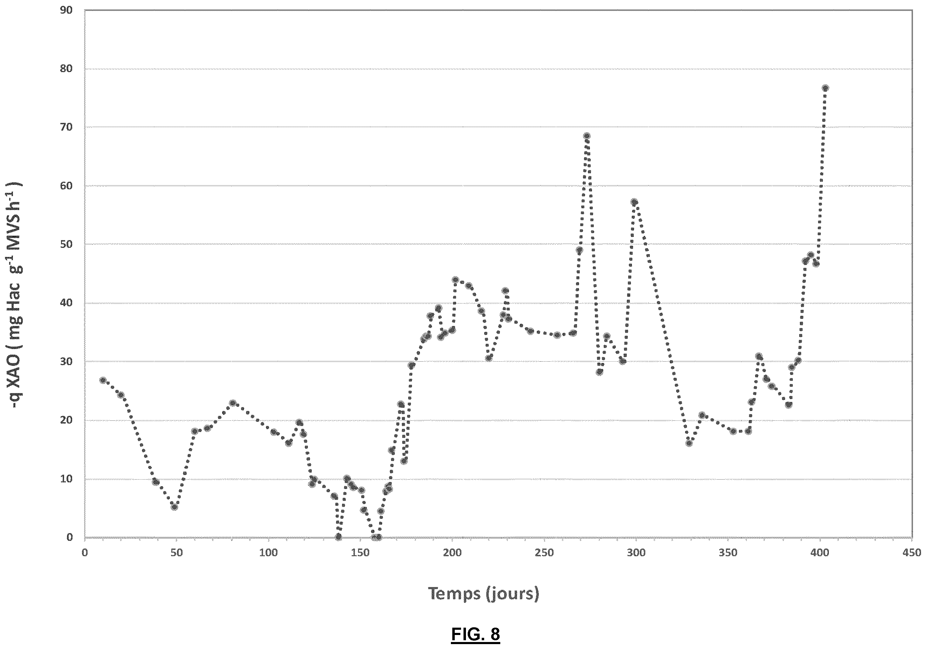

Concrètement, le premier compartiment du sélecteur biologique n'était plus aéré durant la phase V afin d'optimaliser le temps de contact anaérobie à la charge entrante. Cette adaptation a permis de stabiliser le pilote en conditions stationnaires. Ensuite (à partir du jour 374 - Phase VI), ce même compartiment a été aéré de façon à maintenir une consigne en oxygène supérieure à 1.5 mg/L. Lorsque la capacité d'aération était insuffisante pour maintenir cette consigne, le bassin n'était plus aéré. Après un certain temps d'arrêt (typiquement 10 minutes), le bassin était à nouveau réoxygéné. Cette stratégie d'aération a permis d'accroître les cinétiques de mise en réserve de la DCO facilement biodégradable¹ (FIG. 8) grâce à une sélection métabolique avancée en anaérobiose couplée (extension dynamique du temps de contact anaérobie) et à une sélection cinétique en aérobie. Dans ces conditions de fonctionnement, le procédé selon l'invention présentait une bonne résilience face aux variations de charges. En effet, la boue, obtenue après quelques semaines d'essais, se présentait sous la forme d'agrégats microbiens denses et stables compris entre 0.1 et 0.6 mm de diamètre et la vitesse de sédimentation observée était supérieure à 3.4 m/h, permettant de maintenir une concentration importante en boues granulaires dans le réacteur (MLSS : 9.4 g/L ; 94% MVS). Cette concentration élevée en granules sécurisait le traitement à des charges organiques moyennes élevées (∼ 1.5 kg DCO m⁻³ _{réacteur} J⁻¹). Par ailleurs, les performances épuratoires restaient correctes avec une élimination de plus de 86 % de la DCO totale et de 74 % sur l'azote total. L'élimination du phosphore reste
¹ Dans la typologie des eaux résiduaires, on fractionne chaque grande classe de polluant suivant **leur état physique** (fractions décantable, coagulable et soluble) et **leur biodégradabilité** (fractions facilement/rapidement biodégradable, difficilement/lentement biodégradable et inerte/non biodégradable). Réf. : www.suezwaterhandbook.fr. toutefois faible (28 %) et était probablement entravée par le faible ratio DCO/P combiné au développement de GAO qui entrait en compétition avec les PAO pour les mêmes substrats.

Le Tableau 3 présente les performances épuratoires moyennes en fin de phase VI.

**Tableau 3: Performances épuratoires moyennes en fin de phase VI. Échantillonnage moyen 24 heures.**

| **Paramètres** | **Influent** | **Effluent** | **Épuration** |
|---|---|---|---|
| | mg/L | mg/L | % |
| DCO | 179 | 25 | 86 |
| DCOs | | 11 | 94 |
| Nₜₒₜ | 32 | 8.2 | 74 |
| N_{KJ} | | 1.5 | 95 |
| N-NH4 | | 0.6 | 98 |
| N-NO3 | | 6.7 | |
| P-PO₄ (o) | 6.0 | 4.3 | 28 |
| MES | | 14 | |

### 2. Ecologie microbienne

L'essence de la granulation repose sur une bonne gestion des populations microbiennes. L'objectif est d'identifier des indicateurs microbiens de bon fonctionnement du procédé afin de disposer d'un outil supplémentaire pour optimaliser la paramétrisation du démonstrateur selon l'invention.

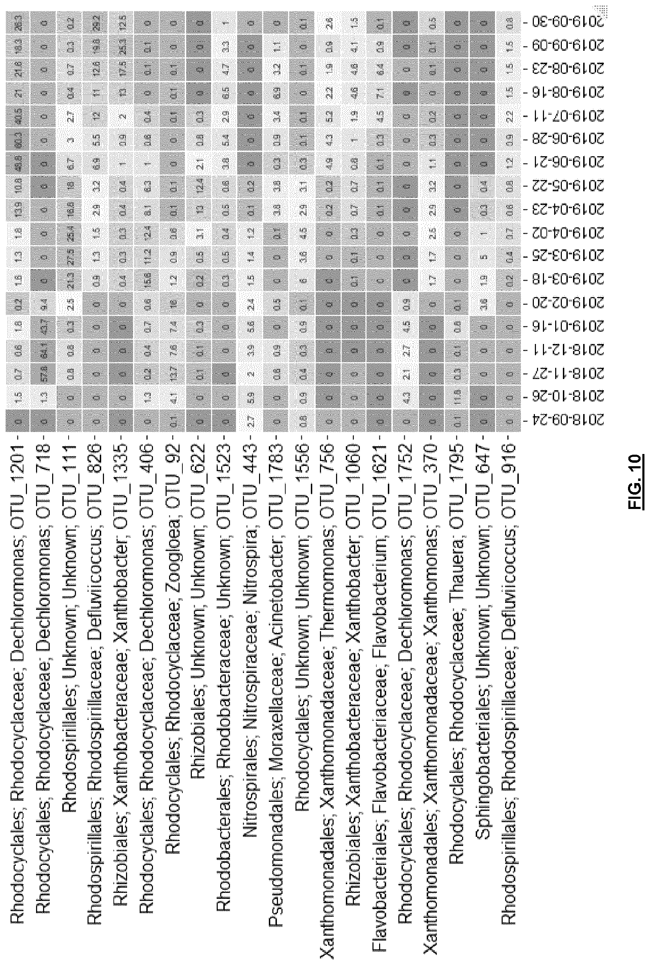

Comme mentionné *supra*, le procédé selon l'invention repose sur une sélection biologique couplée à une sélection physique (trieur). La FIG. 10 présente une cartographie des 20 unités taxonomiques opérationnelles (OTU) les plus abondantes durant l'exploitation du pilote.

*Dechloromonas* (les OTU 406, 718, 1201, 1752) représente le genre bactérien le plus abondant durant l'entièreté des essais. Une analyse de corrélation (Spearman) montre que l'OTU 1201 est maintenu dans le système grâce une augmentation de la pression de sélection sur le trieur (FIG. 11 ; valeur r de 0.798 ; p=7 10⁻⁵). Il est associé à des qualités de boues supérieures (valeur r de 0.721 ; p=7 10⁻⁴) tandis que d'autres OTUs du même genre (406, 718, 1752) sont abondants dans des boues présentant un SVI élevé. *Dechloromonas* est capable d'assimiler les acides gras volatiles en conditions anoxiques. Bien que certaines espèces présentent un phénotype PAO, les différents OTU identifiés dans les boues utilisées ne sont pas corrélés aux performances d'élimination du phosphore. L'élimination du phosphore par suraccumulation serait principalement assurée par *Candidatus* Accumulibacter (0.5% en moyenne) et *Tetrasphaera* (<0.1 %).

En compétition avec les PAO pour les mêmes substrats, le genre *Defluviicoccus* est également bien représenté. L'abondance relative de cette bactérie accumulatrice de glycogène (GAO), classiquement observée dans les boues granulaires, est néanmoins fort variable. Ce genre est particulièrement abondant dans le réacteur selon l'invention pour autant que le temps de contact anaérobie soit inférieur à 80 minutes. Une augmentation de la pression de sélection sur le trieur permet également d'enrichir la biomasse en *Defluviicoccus.*

On retrouve également le genre *Acinetobacter* et l'OTU 1523 de la famille des Rhodobacteraceae qui sont associés à une boue compacte.

On notera également la présence de *Zoogloea* spp. (jusqu'à 16%), appartenant à l'ordre des *Rhodocyclales,* durant les phases de dysfonctionnement du procédé (temps de contact anaérobie trop long). Bien que souvent considéré comme favorable à la granulation en participant au maintien structural des architectures granulaires, ce genre bactérien est principalement connu pour sa capacité de production de polymères extracellulaires (EPS), lesquels peuvent conduire à un phénomène de « bulking » visqueux. Dans le cadre du procédé selon l'invention, *Zoogloea* spp. constitue donc un indicateur de dysfonctionnement du sélecteur biologique.

### 3. Conclusions des essais

Les objectifs de cette tâche étaient de
(1) optimaliser les paramètres de dimensionnement du prototype (pour la construction du démonstrateur « in situ »),
(2) valider la stratégie de régulation du procédé et
(3) identifier des indicateurs microbiens de bon fonctionnement du procédé.

Les essais ont permis de confirmer la faisabilité technique de former des granules caractérisés par une vitesse de sédimentation supérieure à 3.4 m/h sur des eaux urbaines synthétiques diluées. Les enseignements tirés de cette recherche sont :
- ne pas surdimensionner le bassin anaérobie ;
- limiter la charge hydraulique sur le trieur via la mise en place d'un by-pass ;
- gérer dynamiquement les conditions d'oxydoréduction du sélecteur biologique.

Dans ces conditions, une augmentation ponctuelle de la charge horaire n'affectait pas la stabilité des granules, permettant de maintenir une concentration importante en boue (jusqu'à 9.4 g/L ; 94% MVS) dans les bassins tout en exploitant l'unité à des charges organiques moyennes élevées (> 1.3 kg DCO m⁻³ réacteur J⁻¹). Par ailleurs, les performances épuratoires restaient correctes avec une élimination de plus de 86 % de la DCO totale, de 74 % de l'azote total et de 28 % du phosphore total.

Cette étude confirme également que les surfaces de décantation finale - pour clarifier l'effluent - peuvent être significativement réduites.

En termes d'écologie microbienne, on retiendra que
- le procédé selon l'invention favorise particulièrement le GAO *Defluviicoccus* et un OTU du genre *Dechloromonas* probablement impliqué dans la dénitrification ;
- le type d'influent utilisé et la paramétrisation ne favorise pas particulièrement les PAO classiquement observés en boues granulaires (Ca. Accumulibacter ou *Tetrasphaera*);
- un monitoring de *Zoogloea spp.* permet de détecter un dysfonctionnement du sélecteur biologique.

### Symboles de référence

- 1: Réacteur à boues granulaires aérobies
- 11: Bassin anaérobie de tête (1^{er} bassin)
- 12: Bassin aérobie (2^{ème} bassin, sélecteur biologique)
- 12A: Premier compartiment du deuxième bassin (dynamique, festin)
- 12B: Second compartiment du deuxième bassin (continu, festin)
- 13: Bassin aérobie ou anoxique (3^{ème} bassin, famine)
- 14: Décanteur ou clarificateur
- 15: Recirculation des boues
- 16: Recirculation des nitrates
- 17: Purge des boues
- 18: Sélecteur physique ou gravitaire / trieur (séparation des solides)
- 19: Entrée du réacteur
- 22: Bassin anoxique
- 25: Recirculation des granules

**Liste des abréviations**

| **Abréviation** | **Signification** | **Unité** |
|---|---|---|
| A2O | Aérobie/anoxie/oxydation | |
| AGS | Boues granulaires aérobies (en angl. *aerobic granular sludge*) | |
| BNR | Biological Nutrient Removal | |
| CAS | Boues activées conventionnelles (en angl. *conventional activated sludge*) | |
| Cm | Charge massique | kg DCO kg⁻¹ MVS j⁻¹ |
| Cv | Charge volumique | kg DCO m⁻³ j⁻¹ |
| DCO | Demande chimique en oxygène (en angl. *chemical oxygen demand -* COD) | mg O₂/L |
| EPBR | Elimination du phosphore biologique accrue (en angl. *enhanced biological phosphorus removal*) | |
| EPS | Polymère extracellulaire | |
| ERU | Eaux résiduaires urbaines | |
| GAO | Organisme accumulateur de glycogène (en angl. *glycogen accumulating organism*) | |
| IFAS | Integrated Fixed Film Activated Sludge | |
| MBBR | Moving bed bioreactor | |
| MBR | Membrane bioreactor | |
| MES | Matières en suspension | mg L⁻¹ |
| MLSS | Solides en suspension dans les boues activées (en angl. *mixed liquor suspendid solids*) | g L⁻¹ |
| MVS | Matières volatiles en suspension | mg L⁻¹ |
| OTU | Unité taxonomique opérationnelle (en angl. *operational taxonomic unit*) | |
| PAO | Organisme accumulateur de phosphate (en angl. *phosphate accumulating organism*) | |
| PHA | Polyhydroxyalcanoate | |
| qXAO | Vitesse spécifique de consommation de l'acétate en anaérobiose | mg DCOHAC 9⁻¹ MVS h⁻¹ |
| SBR | Réacteur séquentiel discontinu | |
| SVIx | Indice volumique des boues (en angl. *sludge volume index*) | mL g⁻¹MES |
| SNDN | Simultaneous nitrification denitrification | |
| SRT | Temps de rétention solides (en angl. *solid retention time*) | jours |

## Revendications

1. Un réacteur (1) à génération de granules aérobies dans une configuration de flux continu, pour le traitement biologique de biomasse sous forme d'eaux usées urbaines ou industrielles, comprenant successivement, de l'amont vers l'aval :
- une entrée (19) pour les eaux usées avec au moins un ouvrage de prétraitement ;
- un premier bassin de tête (11) normalement opéré en conditions anaérobies;
- un deuxième bassin (12) suivi d'un troisième bassin (13), ces bassins (12, 13) pouvant être au moins partiellement opérés en conditions aérobies ;
- un ouvrage de clarification (14) pourvu d'une première sortie pour un effluent et d'une seconde sortie pour une recirculation de boues (15) vers l'entrée (19) du réacteur (1) ;
- un sélecteur physique ou gravitaire (18) inséré entre l'ensemble des deuxième et troisième bassins (12, 13) d'une part et l'ouvrage de clarification (14) d'autre part, ledit sélecteur physique ou gravitaire (18) étant apte à sélectionner des particules à vitesse de sédimentation élevée d'au moins 2 m/h, de préférence d'au moins 3 m/h, et à effectuer une recirculation (25) de celles-ci vers l'entrée (19) du réacteur (1) ;
**caractérisé en ce que** :
- le deuxième bassin (12) a une fonction de sélecteur biologique de microorganismes favorables à la formation de structures denses telles que des granules, ledit deuxième bassin (12) étant subdivisé en deux compartiments (12A, 12B), un premier compartiment (12A) configuré pour être opéré successivement et alternativement en conditions aérobies et anaérobies, en mode festin, de sorte que la biomasse soit exposée de manière dynamique à une alternance de conditions oxydantes et réductrices respectives, et de sorte que l'on puisse prolonger ou étendre l'anaérobiose du premier bassin de tête (11) dans ledit premier compartiment (12A) du deuxième bassin (12), et effectuer une prolongation correspondante de la mise en réserve de DCO facilement biodégradable sous forme de polymères, et un second compartiment (12B) configuré pour être opéré de façon continue en conditions aérobies en mode festin ; et **en ce que**
- ledit troisième bassin (13) est configuré pour être piloté en conditions aérobies ou anoxiques, en mode famine.

2. Le réacteur (1) selon la revendication 1, **caractérisé en ce que** le premier compartiment (12A) et le second compartiment (12B) du deuxième bassin (12) sont sensiblement de même taille, chacun de ces compartiments (12A, 12B) étant plus petit que le troisième bassin (13).

3. Le réacteur (1) selon la revendication 1 ou 2, **caractérisé en ce que** la répartition des tailles relatives des bassins par rapport au volume disponible sont respectivement de 20 à 30% pour le premier bassin, 5 à 10% pour le deuxième bassin et 60 à 75% pour le troisième bassin.

4. Le réacteur (1) selon la revendication 1 ou 2, **caractérisé en ce que** le troisième bassin (13) est lui-même configuré, ou suivi d'un quatrième bassin configuré pour effectuer une nitrification et une dénitrification simultanées.

5. Le réacteur (1) selon la revendication 1, **caractérisé en ce qu'**il comporte un bypass pour limiter la charge hydraulique sur le sélecteur physique ou gravitaire (18).

6. Un procédé pour le traitement biologique d'eaux usées urbaines ou industrielles au moyen du réacteur (1) à génération de granules aérobies dans une configuration de flux continu, selon l'une quelconque des revendications précédentes, **caractérisé en ce qu'**il comporte au moins les étapes successives suivantes, dans le sens de l'amont vers l'aval :
- on introduit les eaux usées à l'entrée (19) du réacteur (1) à flux continu ;
- on traite les eaux usées dans le premier bassin de tête (11) opéré en conditions anaérobies ;
- on traite les eaux usées, sortant du premier bassin de tête (11), dans le deuxième bassin (12, 12A, 12B) ayant une fonction de sélecteur biologique de microorganismes favorables à la formation de structures denses telles que des granules ; et plus précisément on opère le premier compartiment (12A) selon une gestion dynamique de la fourniture d'oxygène, c'est-à-dire de manière à exposer la biomasse successivement de façon alternée à des conditions aérobies et anaérobies, en mode festin, et on opère le second compartiment (12B) de façon continue en conditions aérobies, en mode festin ;
- on traite les eaux usées sortant du deuxième bassin (12, 12A, 12B) dans le troisième bassin (13) opéré en conditions aérobies ou anoxiques, en mode famine ;
- dans le sélecteur physique ou gravitaire (18), on laisse sédimenter les granules et on procède à la recirculation (25) d'une fraction de ces granules à l'entrée du réacteur (1) à flux continu ;
- dans l'ouvrage de clarification (14), on laisse sortir un effluent du réacteur (1) à une première sortie et on procède, à une deuxième sortie, à une recirculation (15) des boues, dont une partie est purgée, vers l'entrée (19) du réacteur (1) à flux continu ;
ledit procédé étant **caractérisé en ce que**, par la gestion dynamique de la fourniture d'oxygène, la phase d'anaérobiose ayant lieu dans le premier bassin de tête (11) est prolongée/étendue dans ledit premier compartiment (12A) du deuxième bassin (12), selon un temps de séjour hydraulique choisi pour, d'une part, effectuer une augmentation du rendement de mise en réserve de la DCO facilement biodégradable sous forme de polymères tout en limitant la fuite de ladite DCO facilement biodégradable dans le troisième bassin et pour, d'autre part, pour minimiser la production de nitrites et nitrates.

7. Le procédé selon la revendication 6, **caractérisé en ce que** ladite gestion dynamique se base sur la mesure, dans le premier compartiment du deuxième bassin (12A), de la teneur en oxygène dissous, qui est le paramètre permettant de basculer du mode de fonctionnement aérobie dans le mode de fonctionnement anaérobie et vice versa.

8. Le procédé selon la revendication 6, **caractérisé en ce que** le temps de séjour hydraulique dans ledit premier compartiment (12A) du deuxième bassin (12) est compris entre 5 et 30 minutes.

9. Le procédé selon la revendication 6, **caractérisé en ce que** les polymères de réserve sont des PHA.

10. Le procédé selon la revendication 6, **caractérisé en ce que** la prolongation/l'extension de la phase d'anaérobiose dans ledit premier compartiment (12A) du deuxième bassin (12) est effectuée en cas de pointes de charge.

11. Le procédé selon la revendication 6, **caractérisé en ce qu'**on modifie le taux de recirculation (15) des boues dans l'ouvrage de clarification (14) en vue de faire varier et contrôler la vitesse ascensionnelle dans le sélecteur physique ou gravitaire (18) et donc la pression de sélection des granules.

12. Le procédé selon la revendication 6, **caractérisé en ce qu'**un monitoring de l'abondance d'un microorganisme formant des flocs, par exemple *Zoogloea spp.,* est effectué pour détecter un dysfonctionnement du sélecteur biologique.
